# EUROPEAN PATENT APPLICATION

(11) **EP 3 677 883 A1**
(43) Date of publication of application: **08.07.2020**
(21) Application number: 19150393.7
(22) Date of filing: 04.01.2019
(51) Int. Cl.: G01G 19/60, A01K 97/00, G01G 17/08

(54) **UNHOOKING DEVICE**

(71) Applicant: Zhejiang Hengfeng Top Leisure Co., Ltd., Zhejiang 313200 (CN)
(72) Inventor: Baoqing, Yang, Hangzhou 310015 (CN)
(74) Representative: Reiser & Partner Patentanwälte mbB

(57) **Abstract**

Unhooking device (1), comprising a support (2) with a frame (3), wherein at least three legs (4, 5, 6, 7) are assigned to the frame (3), wherein a rest (8) is fixed in the frame (3), wherein a device (9) for determining the weight of an object placed on the support (8) is assigned to the support (2).

## Description

The invention concerns an unhooking device comprising a support with a frame, wherein at least three legs are associated with the frame and wherein a rest is fixed in the frame.

When fishing, it is necessary to remove the hook from the mouth of a caught fish. For this purpose, the fish caught with a fishing rod is usually arranged on an unhooking device with a flat rest. This prevents the skin of the fish from being damaged. This is especially important when fishing carp.

It is known from the prior art to use an unhooking device in the form of a mat, which is placed on the ground. For unhooking purposes, the fish is placed on the unhooking mat and the hook can be removed from the fish.

Furthermore, it is known that an unhooking device is formed in the form of a support with a frame, in which a flat rest is attached. The support is provided with legs in order to place the support on the ground. The advantage is that the flat rest can be arranged in the frame in such a way that it forms a trough in which the fish can be placed. This improves handling during unhooking.

Especially in sport fishing, the fish is weighed immediately after the hook has been released. For this purpose, it has been necessary to place the fish in a separate weighing device or to weigh the fish together with the unhooking device, for example with a spring weighing device. On the one hand, this requires additional devices and work steps and, on the other hand, this is also very inaccurate.

The object of the invention is to provide an unhooking device which allows a safe removal of a hook from a fish and which allows a simple determination of the weight of the fish.

This object is achieved by the features of claim 1. The dependent claims refer to advantageous embodiments.

The inventive unhooking device comprises a support with a frame, wherein at least three legs are associated with the frame, wherein a rest is fixed in the frame and wherein a device for determining the weight of an object placed on the rest is associated with the support.

The rest is preferably a sheet or a canvas and consists of a plastic material. The rest is also preferably arranged in the frame in such a way that a trough is formed in which the object, for example a fish, can be placed.

Since a device for determining the weight of an object placed on the support is directly associated with the support, the weight of the fish can be measured simultaneously with the removal of the fish hook from the fish. The device is preferably designed as a weight scale and is firmly connected to the unhooking device or is an integral part of the unhooking device.

The legs are preferably arranged on the frame in such a way that the support can be set up safely and without tilting on a base so that the rest with the trough formed from the rest is at a distance from the base.

The frame may consist of at least one tube. The frame preferably consists of several tubes which are detachably inserted into each other. This allows the unhooking device to be disassembled for transport.

The frame can span an essentially rectangular plane. Accordingly, a rectangular rest with an elongated trough is formed. This type of rest is suitable for the anatomy of a fish.

Four legs can be assigned to the frame. The legs are preferably assigned to the corner areas of the frame, so that the frame can be placed securely on a base.

The legs can be fixed to the frame by means of a fastening element. The fastening element can, for example, be designed as a hinge so that the legs can be folded against the frame for transport. In this embodiment, the legs are hinged to the frame. Alternatively, it is conceivable that the fastening element is designed as a quick-release fastener, which enables the leg to be easily and quickly mounted or removed from the frame. In this context, it is conceivable that the fastening element is designed as a bayonet joint or screw connection.

A sensor for determining the weight can be assigned to each of the fastening elements. In this embodiment, each sensor assigned to a leg records a partial weight of the object placed on the support. The total weight results from the sum of the partial weights detected by the sensors, so that the weight of the object placed on the support can be easily determined.

The sensors can be designed as weighing cells. Weighing cells contain a spring body, for example an element made of metallic material whose geometry changes slightly under the influence of the object to be weighed. The elastic deformation is detected by strain gauges and converted into an electrical signal.

In this context, it is advantageous if the weighing cell is designed as a double bending beam. Weighing cells in the form of double bending beams are particularly suitable for detecting smaller loads of up to several kilograms. Such load cells are highly accurate.

At least one level indicator can be assigned to the frame. The level indicator can, for example, be designed as a spirit level and enables the frame to be levelled so that it is aligned horizontally. This improves the handling of the object placed on the rest and improves the measuring accuracy of the weight determination device.

The frame can be provided with a central unit for measuring the individual weights detected by the sensors. The central unit shall preferably have a display device and/or a memory device.

The sensors can be connected to the central unit via a cable connection or via a radio link and transmit the measured partial weights. In the central unit, the partial weights are summed and the total weight is determined. The total weight can be displayed in the display device. Furthermore, it is conceivable to store the total weight in the storage device. It is also conceivable to transmit the total weight to a remote electrical device via remote transmission, for example via a mobile network such as wireless local area network.

The legs can be height-adjustable. In addition, it is conceivable that the legs each have a first leg element and a second leg element, which are telescopically inserted into each other. However, it is also conceivable that the legs are each provided with foot elements, which are screwed into the legs and can be turned in or out.

An embodiment of the inventive unhooking device is explained in more detail below on the basis of the figures. These show, in each case schematically:

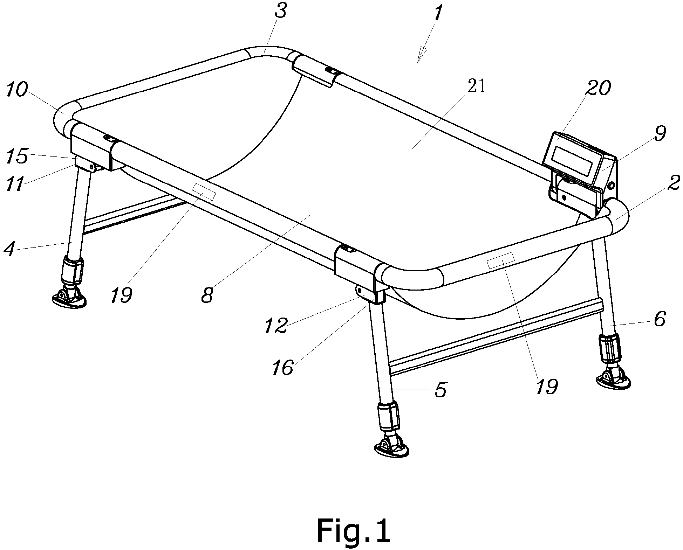

- Fig. 1: an unhooking device in spatial representation;

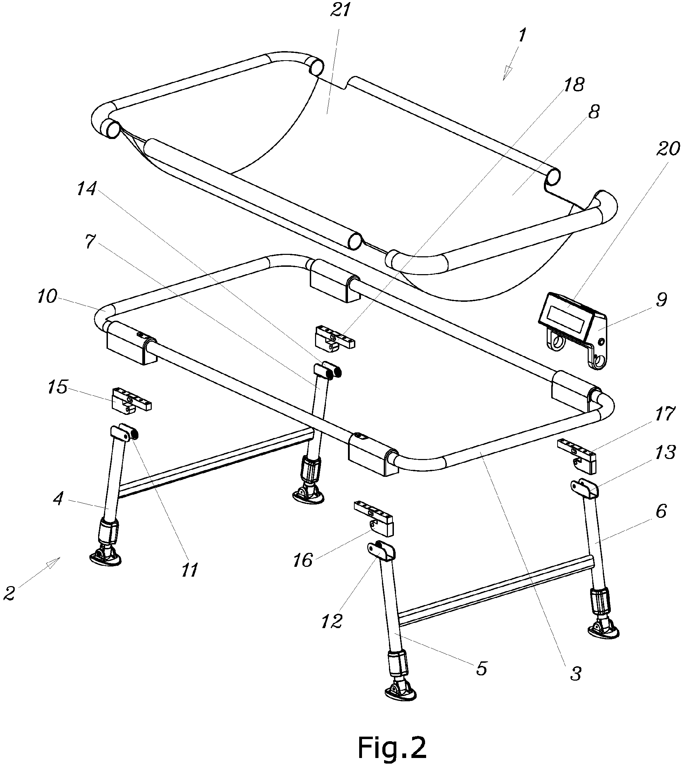

- Fig. 2: the unhooking device according to Fig. 1 in an exploded view;

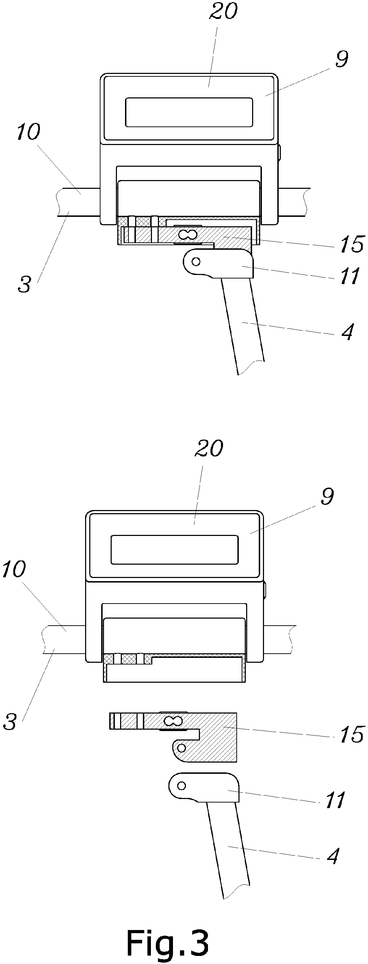

- Fig. 3: in detail the frame in the area of a fastening element with central unit;

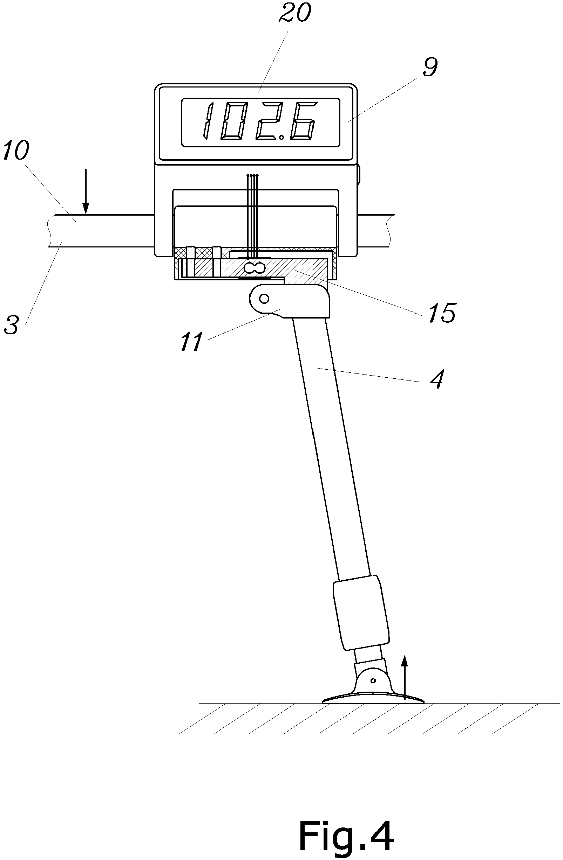

- Fig. 4: in detail the frame in the area of a fastening element with the leg and central unit set up on the ground.

The figures show an unhooking device 1, comprising a support 2 with a frame 3. Four legs 4, 5, 6, 7 are assigned to the frame 3. The frame 3 consists of several tubes 10 inserted into each other. The tubes 10 are detachably inserted into each other so that the frame 3 can be disassembled for transport. When assembled, the frame 3 spans an essentially rectangular plane. In the plane spanned by the frame 3, a flat rest 8 is fastened. The rest 8 consists of a waterproof fabric coated with plastic. The rest 8 is designed in such a way that an elongated trough 21 is formed, in which an object can be placed. With regard to the inventive unhooking device 1, the trough 21 is designed in particular so that a fish which has been fished and which carries a hook which is to be removed can be placed in it.

The legs 4, 5, 6, 7 are each fixed to the frame 3 by means of fastening elements 11, 12, 13, 14. The fastening elements 11, 12, 13, 14 have hinges so that the legs 4, 5, 6, 7 are hinged to the frame 3.

Sensors 15, 16, 17, 18 for determining the weight of the object placed on the rest 8 are assigned respectively to the fastening elements 11, 12, 13, 14. The sensors 15, 16, 17, 18 are designed as weighing cells. In the present embodiment, the sensors 15, 16, 17, 18 are designed as double bending beam spring bodies, wherein the weight is determined by the elastic deformation of the spring body, which in turn is detected by strain gauges.

A central unit 20 for recording the individual weights determined by sensors 15, 16, 17, 18 is assigned to the frame 3. The central unit 20 has a display device and a storage device. The sensors 15, 16, 17, 18 are connected to the central unit 20 via electrical cabling.

A level indicator 19 in the form of a spirit level is assigned to the frame 3. Furthermore, the legs 4, 5, 6, 7 are height-adjustable so that the frame 3 can be levelled with respect to the ground by adjusting the legs 4, 5, 6, 7.

The trough 21 of the rest 8 and the legs 4, 5, 6, 7 are designed in such a way that the trough 21 is at a distance from the ground on which the unhooking device 1 is set up.

## Claims

1. Unhooking device (1), comprising a support (2) with a frame (3), wherein at least three legs (4, 5, 6, 7) are assigned to the frame (3), wherein a rest (8) is fixed in the frame (3), **characterized in that** a device (9) for determining the weight of an object placed on the support (8) is assigned to the support (2).

2. Unhooking device according to claim 1, **characterized in that** the frame (3) is formed from at least one tube (10).

3. Unhooking device according to claim 1 or 2, **characterized in that** the frame (3) spans a plane which is essentially rectangular.

4. Unhooking device according to any of claims 1 to 3, **characterized in that** the rest (8) is provided with a trough (21).

5. Unhooking device according to any of claims 1 to 4, **characterized in that** four legs (4, 5, 6, 7) are associated with the frame (3).

6. Unhooking device according to any of claims 1 to 5, **characterized in that** the legs (4, 5, 6, 7) are arranged on the frame (3) in a foldable manner.

7. Unhooking device according to any of claims 1 to 6, **characterized in that** the legs (4, 5, 6, 7) are each fixed to the frame (3) via a fastening element (11, 12, 13, 14).

8. Unhooking device according to claim 7, **characterized in that** sensors (15, 16, 17, 18) for determining the weight are assigned respectively to the fastening elements (11, 12, 13, 14).

9. Unhooking device according to claim 8, **characterized in that** the sensors (15, 16, 17, 18) are designed as weighing cells.

10. Unhooking device according to any of claims 1 to 9, **characterized in that** at least one level indicator (19) is assigned to the frame (3).

11. Unhooking device according to any of claims 1 to 10, **characterized in that** the frame (3) has a central unit (20) for detecting the individual weights determined by the sensors (15, 16, 17, 18).

12. Unhooking device according to claim 11, **characterized in that** the central unit (20) has a display device and/or a storage device.

13. Unhooking device according to any of claims 1 to 12, **characterized in that** the legs (4, 5, 6, 7) are height-adjustable.
